# EUROPÄISCHE PATENTSCHRIFT

(11) **EP 1 516 133 B1**
(45) Veröffentlichungstag und Bekanntmachung des Hinweises auf die Patenterteilung: **05.09.2007**
(21) Anmeldenummer: 03757018.1
(22) Anmeldetag: 04.06.2003
(51) Int. Cl.: F16F 1/373, F16F 1/38, F16F 15/08

(54) **RUNDLAGER**
CIRCULAR MOUNT
PALIER ROND

(30) Priorität: 10.06.2002 DE 10225797
(43) Veröffentlichungstag der Anmeldung: 23.03.2005
(73) Patentinhaber: BASF Aktiengesellschaft, 67056 Ludwigshafen (DE)
(72) Erfinder: WULF, Andreas, 49406 Barnstorf (DE); BERELSMANN, Ralf, 49134 Wallenhorst (DE)
(86) Internationale Anmeldenummer: PCT/EP2003/005822
(87) Internationale Veröffentlichungsnummer: WO 2003/104676

(56) Entgegenhaltungen:
- DE-U- 20 201 879
- US-A- 3 171 699

## Beschreibung

Die Erfindung betrifft Rundlager enthaltend (i) bevorzugt zylindrische Außenbuchse, (ii) bevorzugt zylindrisches bevorzugt hohles Lagerelement auf der Basis von bevorzugt zelligen Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm, die bevorzugt von der Außenbuchse umfasst werden, und (iii) hohle bevorzugt zylindrische Innenbuchse, die bevorzugt in dem Lagerelement (ii) positioniert ist. Ein solches Rundlagen ist z.B. aus den DE-U-202 01 879 bekannt. Außerdem betrifft die Erfindung Automobile oder Lastkraftwagen enthaltend die erfindungsgemäßen Rundlager.

Rundlager werden in Automobilen innerhalb des Fahrwerks und bei der Lagerung von Aggregaten verwendet und sind allgemein bekannt. Mit Hilfe von Rundlagern werden im Automobil Aggregate, Fahrwerksbauteile u.a. untereinander oder mit der Karosserie verbunden. Dabei erfüllen sie durch die Verwendung von Elastomerwerkstoffen die Funktion einer elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes.

Aufgabe der vorliegenden Erfindung war es, Rundlager enthaltend (i) Außenbuchse, (ii) Lagerelement auf der Basis von zelligen Polyisocyanat-Polyadditionsprodukten und (iii) hohle Innenbuchse zu entwickeln, bei denen der Haftverbund zwischen dem Lagerelement und der hohlen Innenbuchse nicht mehr über einen Haftvermittler erreicht werden sollte. Für Applikationen, bei denen das Rundlager mittels einer Schraubverbindung gefügt werden musste, sollte der Einsatz einer metallenen Hülse möglich sein, und es wurde ein verbesserter Korrosionsschutz gefordert.

Diese Aufgabe konnte dadurch gelöst werden, dass die am (ii) Lagerelement anliegende Oberfläche von (i) und/oder (iii) thermoplastisches Polyurethan, mit oder ohne Füllung mit Glasfasern und/oder Polyurethangießelastomere, bevorzugt thermoplatisches Polyurethan, enthält.

Durch den Einsatz von thermoplastischem Polyurethan, im Folgenden auch als TPU bezeichnet, wird erreicht dass auf den Gebrauch chemischer Haftvermittler bei der Anbindung des Lagerelementes verzichtet werden kann, weil das zellige Polyisocyanat-Polyadditionsprodukt sich sehr gut haftend mit dem TPU verbindet. Durch die bevorzugte Verwendung des TPU in Kombination mit einem metallenen Einleger wird die Innenhülse für eine Schraubverbindung brauchbar. Die Kombination von TPU und Metall zu einer hohlen Innenhülse, ausgeführt als form-, kraft- oder stoffschlüssige Verbindung, führt insbesondere dazu, dass durch die Verwendung von Edelstahl oder Aluminium auf einen speziellen Korrosionsschutz der metallenen Teile verzichtet werden kann. Somit konnten die o.a. Anforderungen durch diese Kombination von verschiedenen Materialien erfüllt werden. Alternativ oder zusätzlich zu den besonders bevorzugten TPU können allgemein bekannte Polyurethangießelastomere eingesetzt werden. Im Gegensatz zu den TPU stellen die Gießelastomere üblicherweise vernetzte Polyurethane dar.

Thermoplastische Polyurethane sind allgemein bekannt und kommerziell, beispielsweise bei der Elastogran GmbH, Deutschland erhältlich. Bevorzugt weist das thermoplastische Polyurethan eine Härte von 60 Shore A bis 85 Shore D auf. Die TPU können gegebenenfalls auch in allgemein bekannten Mischungen mit weiteren thermoplatischen Kunststoffen, beispielsweise Polyolefinen, ABS und/oder ASA-Kunststoffen sowie Füllstoffen wie z.B. Glasfasern eingesetzt werden. Bevorzugt werden die TPU nicht in Mischung mit anderen Kunststoffen, aber gefüllt mit Glasfasern, eingesetzt. Die TPU können auf allgemein bekannten Rohstoffen, beispielsweise den allgemein üblichen Isocyanaten, Polyolen, Kettenverlängerungsmitteln, Katalysatoren und Hilfsstoffen basieren. Die Herstellung sowohl mit TPU beschichteter Innen- und/oder Außenbuchsen oder dieser Buchsen komplett auf der Basis von TPU oder Mischungen von TPU mit anderen thermoplastischen Kunststoffen ist allgemein bekannt und dem Fachmann geläufig. Beispielsweise können die Innen- und/oder Außenbuchse mittels Spritzguss aus dem TPU gefertigt werden. Auch eine Beschichtung vorgefertigter Metallbuchsen mit TPU-Folien, die auf die gewünschte Oberfläche der Buchse geschmolzen wird, ist möglich. Die Dicke des TPU, das am Lagerelement (ii) anliegt, beträgt bevorzugt 1 mm bis 15 mm.

Die Innenbuchse (iii) kann beispielsweise komplett auf thermoplastischem Polyurethan basieren. Alternativ ist es möglich, dass die Innenbuchse (iii) eine zum Lagerelement (ii) gerichtete äußere Buchse (vi) auf der Basis von thermoplastischem Polyurethan sowie eine an die äußere Buchse (vi) anliegende innere Buchse (vii) auf der Basis von Metall, z.B. Stahl, Eisen und/oder Aluminium umfasst. Bei der zweiteiligen Ausführung sind die Buchsen (vi) und (vii) bevorzugt stoff-, form- oder kraftschlüssig miteinander verbunden, beispielsweise indem sie miteinander verklebt, eingeschraubt oder aufgepresst sind. Zum Beispiel kann durch das Aufschmelzen einer TPU Folie als (vi) innere Buchse auf die äußere Buchse eine Haftung zwischen den Buchsen erzielt werden. Die Innenbuchse (iii) verfügt über eine Innenbohrung üblicherweise zur Aufnahme eines Befestigungsbolzens. Der Außendurchmesser ergibt sich aus konstruktiven Gründen.

Bei Applikationen, bei denen keine haftende Verbindung zwischen der dem Lagerelement zugewandten Oberfläche der Innenhülse gefordert wird, kann diese mit einem, bevorzugt, aufgesetzten Kragen, der bevorzugt senkrecht zur Innenbohrung und bevorzugt auf der äußeren Oberfläche der Innenbuchse (iii) umlaufend ist, versehen werden. Dabei kann dieser in Durchmesser, Dicke, Ausführung und Anzahl variieren. Der Kragen bildet bei radialer Belastung an den Flanken die bevorzugte Reibfläche und an der Stirnseite die Wegbegrenzung bei der Einfederung. Diese Kontur bietet ebenfalls eine besonders vorteilhafte Charakteristik bei auftretenden kardanischen Belastungen. Bevorzugt wird die Innenbuchse in axialer Ausrichtung nicht vom Lagerelement (ii) überragt.

Das Lagerelement (ii) kann erfindungsgemäß aus einem oder mehreren Einzelteilen, die elastische Eigenschaften aufweisen, bestehen. Werden mindestens zwei Lagerelemente verwendet, so können diese je nach Anforderung quasi in einem Stecksystem zum vollständigen Lagerelement zusammengefügt werden, wobei allgemein bekannte "Steck"-Verfahren gewählt werden können, z.B. Nut-Feder. Damit können Lagerelemente mit unterschiedlichen Eigenschaften erzeugt werden, die je nach ihrer Anordnung im Rundlager spezifische Anforderungen übernehmen können. Werden mindestens zwei Lagerelemente (ii) eingesetzt, weisen diese bevorzugt unterschiedliche Dichten und somit unterschiedliche mechanische und dynamische Eigenschaften auf. Während beispielsweise ein Lagerelement (ii) aus einem mikrozelligen PUR mit geringer Dichte bestehen kann um im Einsatzfall durch die Relativbewegung zur Innen und Aussenbuchse viel Dämpfung zu erzeugen, kann ein weiteres Lagerelement (ii) im Rundlager aus einem mikrozelligen Pur mit hoher Dichte gefertigt sein, um dynamische Steifigkeiten zu gewährleisten und um die max. Verformung zu reduzieren. Erfindungsgemäß kann somit auf spezielle Anforderungen eingegangen werden. Denkbar sind auch Lagerelemente (ii) aus bevorzugt kompakten TPU. Das erfindungsgemäße Lagerelement (ii) basiert bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird. Das Lagerelement (ii) ist bevorzugt haftend mit dem thermoplastischen Polyurethan der Außenbuchse (i) und/oder der Innenbuchse (iii) verbunden. Unter dem Ausdruck "haftend verbunden" ist insbesondere zu verstehen, dass das Lagerelement (ii) mit dem TPU beispielsweise mit allgemein üblichen Klebstoffen verklebt oder direkt auf dem TPU aufgeschäumt ist. Als Klebstoff wird bevorzugt ein reaktiver Schmelzklebstoff bevorzugt auf der Basis verkapselter Isocyanate mit einem Schmelzbereich bei Temperaturen von kleiner 95°C, bevorzugt 30°C bis 90°C, besonders bevorzugt 45°C bis 65°C, und einem Reaktionsbereich bei Temperaturen bevorzugt größer 100°C, besonders bevorzugt 110°C bis 125°C eingesetzt. Derartige reaktive Schmelzklebstoffe sind bei der Firma Collano Ebnöther AG, Sempach-Station, Schweiz erhältlich und in dem Artikel "Vorapplizierbare PUR-Hotmelts: Aktivierung per Wärmestoß", Adhäsion Kleben und Dichten, Jahrgang 43, 10/99, Seiten 22 bis 24 beschrieben. Die Herstellung des Lagerelementes auf der Oberfläche des TPU kann nach allgemein bekannten Verfahren erfolgen, beispielsweise indem man die entsprechende TPU-Hülse in einer Form platziert und in dieser Form das zellige Polyisocyanat-Polyadditionsprodukt herstellt.

Die Außenbuchse (i) kann komplett auf thermoplastischem Polyurethan basieren. Alternativ ist es möglich, dass die Außenbuchse (i) eine zum Lagerelement (ii) gerichtete innere Buchse (iv) auf der Basis von thermoplastischem Polyurethan sowie eine an die innere Buchse (iv) anliegende äußere Buchse (v) auf der Basis von Metall, z.B. Stahl, Eisen und/oder Aluminium umfasst. Bei der zweiteiligen Ausführung sind die Buchsen (iv) und (v) bevorzugt haftend miteinander verbunden, beispielsweise indem sie miteinander verklebt sind. Zum Beispiel kann durch das Aufschmelzen einer TPU Folie als (iv) innere Buchse auf die äußere Buchse eine Haftung zwischen den Buchsen erzielt werden. Die Außenbuchse (i) verfügt über einen Außendurchmesser und einen Innendurchmesser, die in den Abmaßen und Ausführungen variieren können. Die Erfindung umfasst sowohl kalibrierte und unkalibrierte Buchsen. Eine Fixierung der Einzelteile, d.h. Innenbuchse (iii), Lagerelement(e) (ii) und Außenbuchse (i) kann beispielsweise durch eine Kalibrierung erreicht werden. Beispielsweise können bei dem Zusammenbau die Einzelteile in die Außenbuchse zusammengefügt werden, wobei der Außendurchmesser der Innenbuchse geringfügig kleiner als der Innendurchmesser der Außenbuchse ist. Nachdem alle Teile zusammen gefügt sind, kann anschließend die Außenbuchse im Durchmesser kleiner kalibriert werden, wodurch die eingesetzten Teile zueinander fixiert werden. Die Außenbuchse kann auch so ausgeführt sein, dass sie vor einem einteiligen oder mehrteiligen Umformungsprozess zur endgültigen Formgebung mit den Elastomerwerkstoffen und der Innenbuchse komplettiert wird. Die Elastomerteile können einen größeren Außendurchmesser haben als der Innendurchmesser der Außenbuchse. Dadurch wird eine Vorspannung des Elastomerbauteils erzielt. Bei dieser Bauweise kann auf einen anschließenden Kalibrierprozess verzichtet werden. Diese Vorteile gelten auch, wenn der Innendurchmesser des Elastomerbauteile kleiner ist als der Außendurchmesser der Innenbuchse.

Bevorzugt werden die Lagerelemente (ii) passgenau in der Außenbuchse (i) und die Innenbuchse (iii) passgenau im Lagerelement gegebenenfalls aufgebaut aus den einzelnen Lagerelementen (ii) positioniert, so dass die Teile derart zueinander fixiert sind, dass das gesamte Lagerelement bestehend aus den einzelnen Lagerelementen (ii) sowohl an (i) als auch an (iii) reibt, wenn dies konstruktiv gewünscht ist.

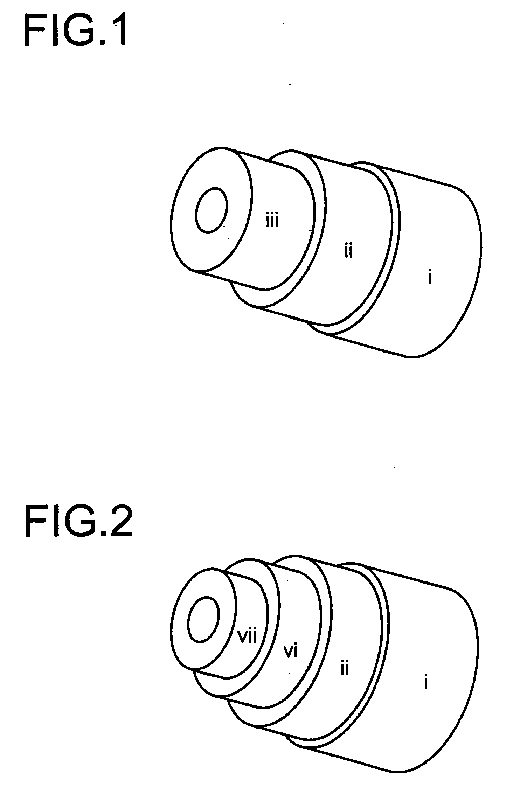

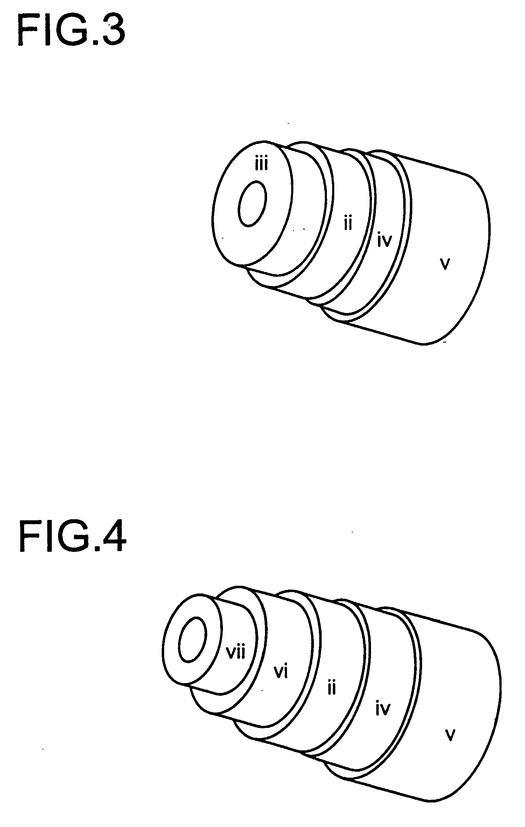

Erfindungsgemäße Rundlager sind in den Figuren 1 bis 4 dargestellt. Figur 1 zeigt ein Rundlager mit Innenbuchse (iii), Lagerelement (ii) und Außenbuchse (i). Figur 2 stellt ein Rundlager dar, bei dem die Innenbuchse aus einer äußeren Innenbuchse (vi) enthaltend TPU und einer inneren Innenbuchse (vii) aus Metall besteht. Figur 3 bildet ein Rundlager ab, bei dem die Außenbuchse aus einer inneren Außenbuchse (iv) enthaltend TPU und einer äußeren Außenbuchse (v) aus Metall besteht. Figur 4 stellt ein Rundlager mit zweiteiliger Innen- und Außenbuchse dar. Bei den Figuren sind die einzelnen Buchsen zur besseren Übersicht hervorstehend dargestellt. Erfindungsgemäß können die einzelnen Buchsen / Lagerelemente die gleiche Höhe aufweisen. Es ist auch möglich, das die inneren Teile des Rundlagers eine geringere Höhe als die Äußeren Teile aufweisen, während in den Figuren die inneren Teile ein größere Höhe aufweisen und hervorragen.

## Patentansprüche

1. Rundlager enthaltend (i) Außenbuchse, (ii) Lagerelement auf der Basis von Polyisocyanat-Polyadditionsprodukten und (iii) hohle Innenbuchse, **dadurch gekennzeichnet, dass** die am (ii) Lagerelement anliegende Oberfläche von (i) und/oder (iii) thermoplastisches Polyurethan und/oder Polyurethangießelastomere enthält.

2. Rundlager gemäß Anspruch 1, **dadurch gekennzeichnet, dass** die Außenbuchse (i) auf thermoplastischem Polyurethan basiert.

3. Rundlager gemäß Anspruch 1, **dadurch gekennzeichnet, dass** die Außenbuchse (i) eine zum Lagerelement (ii) gerichtete innere Buchse (iv) auf der Basis von thermoplastischem Polyurethan sowie eine an die innere Buchse (iv) anliegende äußere Buchse (v) auf der Basis von Metall umfasst.

4. Rundlager gemäß Anspruch 1, **dadurch gekennzeichnet, dass** die Innenbuchse (iii) auf thermoplastischem Polyurethan basiert.

5. Rundlager gemäß Anspruch 1, **dadurch gekennzeichnet, dass** die Innenbuchse (iii) eine zum Lagerelement (ii) gerichtete äußere Buchse (vi) auf der Basis von thermoplastischem Polyurethan sowie eine an die äußere Buchse (vi) anliegende innere Buchse (vii) auf der Basis von Metall umfasst.

6. Rundlager gemäß Anspruch 3, **dadurch gekennzeichnet, dass** die Buchsen (iv) und (v) haftend verbunden sind.

7. Rundlager gemäß Anspruch 5, **dadurch gekennzeichnet, dass** die Buchsen (vi) und (vii) haftend verbunden sind.

8. Rundlager gemäß Anspruch 1, **dadurch gekennzeichnet, dass** das am Lagerelement (ii) anliegende thermoplastische Polyurethan eine Dicke von 1 mm bis 15 mm aufweist.

9. Rundlager gemäß Anspruch 1, **dadurch gekennzeichnet, dass** das Lagerelement (ii) haftend mit dem thermoplastischen Polyurethan der Außenbuchse (i) und/oder der Innenbuchse (iii) verbunden ist.

10. Rundlager gemäß Anspruch 1, **dadurch gekennzeichnet, dass** das thermoplastische Polyurethan eine Härte von Shore - 60 A bis Shore - 85 D aufweist.

11. Automobile oder Lastkraftwagen enthaltend Rundlager gemäß einem der Ansprüche 1 bis 10.

## Claims

1. A round bearing comprising (i) an outer bush (ii) a bearing element based on polyisocyanate polyadducts and (iii) a hollow inner bush, wherein that surface of (i) and/or (iii) which is adjacent to (ii) the bearing element comprises thermoplastic polyurethane and/or polyurethane casting elastomers.

2. The round bearing according to claim 1, wherein the outer bush (i) is based on thermoplastic polyurethane.

3. The round bearing according to claim 1, wherein the outer bush (i) comprises an internal bush (iv) directed toward the bearing element (ii) and based on thermoplastic polyurethane and an external bush (v) adjacent to the inner bush (iv) and based on metal.

4. The round bearing according to claim 1, wherein the inner bush (iii) is based on thermoplastic polyurethane.

5. The round bearing according to claim 1, wherein the inner bush (iii) comprises an external bush (vi) directed toward the bearing element (ii) and based on thermoplastic polyurethane and an internal bush (vii) adjacent to the external bush (vi) and based on metal.

6. The round bearing according to claim 3, wherein the bushes (iv) and (v) are adhesively bonded.

7. The round bearing according to claim 5, wherein the bushes (vi) and (vii) are adhesively bonded.

8. The round bearing according to claim 1, wherein the thermoplastic polyurethane adjacent to the bearing element (ii) has a thickness of from 1 to 15 mm.

9. The round bearing according to claim 1, wherein the bearing element (ii) is adhesively bonded to the thermoplastic polyurethane of the outer bush (i) and/or of the inner bush (iii).

10. The round bearing according to claim 1, wherein the thermoplastic polyurethane has a hardness of from Shore 60 A to Shore 85 D.

11. An automobile or truck comprising a round bearing according to any of claims 1 to 10.

## Revendications

1. Palier rond comprenant une douille extérieure (i), un élément de palier (ii) à base de produits de polyaddition de polyisocyanate et une douille intérieure creuse (iii), **caractérisé en ce que** la surface de (i) et/ou de (iii) adjacente à l'élément de palier contient du polyuréthanne thermoplastique et/ou un élastomère polyuréthannique coulé.

2. Palier rond suivant la revendication 1, **caractérisé en ce que** la douille extérieure (i) est à base de polyuréthanne thermoplastique.

3. Palier rond suivant la revendication 1, **caractérisé en ce que** la douille extérieure (i) comprend une douille intérieure (iv) alignée sur l'élément de palier (ii), à base de polyuréthanne thermoplastique et une douille extérieure (v) adjacente à la douille intérieure (iv) à base de métal.

4. Palier rond suivant la revendication 1, **caractérisé en ce que** la douille intérieure (iii) est à base de polyuréthanne thermoplastique.

5. Palier rond suivant la revendication 1, **caractérisé en ce que** la douille intérieure (iii) comprend une douille extérieure (vi) alignée sur l'élément de palier (ii), à base de polyuréthanne thermoplastique, ainsi qu'une douille intérieure (vii) adjacente à la douille extérieure (vi), à base de métal.

6. Palier rond suivant la revendication 3, **caractérisé en ce que** les douilles (iv) et (v) sont liées de manière adhésive.

7. Palier rond suivant la revendication 5, **caractérisé en ce que** les douilles (vi) et (vii) sont liées de manière adhésive.

8. Palier rond suivant la revendication 1, **caractérisé en ce que** le polyuréthanne thermoplastique adjacent à l'élément de palier (ii) a une épaisseur de 1 mm à 15 mm.

9. Palier rond suivant la revendication 1, **caractérisé en ce que** l'élément de palier (ii) est lié de manière adhésive au polyuréthanne thermoplastique de la douille extérieure (i) et/ou de la douille intérieure (iii).

10. Palier rond suivant la revendication 1, **caractérisé en ce que** le polyuréthanne thermoplastique présente une dureté Shore 60 A à Shore 85 D.

11. Véhicules automobiles ou poids-lourds contenant des paliers ronds suivant l'une quelconque des revendications 1 à 10.
